(19) Europäisches Patentamt
European Patent Office
Office européen des brevets

(11) Veröffentlichungsnummer : **0 126 871**
**B1**

(12) **EUROPÄISCHE PATENTSCHRIFT**

(45) Veröffentlichungstag der Patentschrift : **08.07.87**

(51) Int. Cl.[4] : **C 08 K 9/06**, C 08 L 21/00, C 09 C 3/12

(21) Anmeldenummer : **84102751.9**

(22) Anmeldetag : **14.03.84**

(54) **An der Oberfläche modifizierte natürliche oxidische oder silikatische Füllstoffe, ein Verfahren zur Herstellung und deren Verwendung.**

(30) Priorität : **23.04.83 DE 3314742**

(43) Veröffentlichungstag der Anmeldung : **05.12.84 Patentblatt 84/49**

(45) Bekanntmachung des Hinweises auf die Patenterteilung : **08.07.87 Patentblatt 87/28**

(84) Benannte Vertragsstaaten : **BE DE FR GB IT**

(56) Entgegenhaltungen :
**EP-A- 0 126 186**
**US-A- 4 076 550**
**Die Akte enthält technische Angaben, die nach dem Eingang der Anmeldung eingereicht wurden und die nicht in dieser Patentschrift enthalten sind.**

(73) Patentinhaber : **Degussa Aktiengesellschaft**
**Weissfrauenstrasse 9**
**D-6000 Frankfurt am Main 1 (DE)**

(72) Erfinder : **Kerner, Dieter, Dr.**
**Am Hexenpfad 21**
**D-6450 Hanau 1 (DE)**
Erfinder : **Kleinschmit, Peter, Dr.**
**Wildaustrasse 19**
**D-6450 Hanau 9 (DE)**
Erfinder : **Parkhouse, Alan**
**Bussardweg 31**
**D-5047 Wesseling (DE)**
Erfinder : **Wolff, Siegfried**
**Weiherstrasse 28**
**D-5303 Bornheim-Merten (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung betrifft ein Verfahren zur Herstellung von mit Organosiliciumverbindungen modifizierten natürlichen oxidischen oder silikatischen Füllstoffen und deren Verwendung in vulkanisierbaren Kautschukmischungen.

Es ist bekannt, oxidische Oberflächen mit Organosiliciumverbindungen zu behandeln, um durch diese Vorbehandlung den Verbund zwischen oxidischem Füllstoff und organischen Polymeren unterschiedlichster chemischer Zusammensetzung und damit die verstärkenden Eigenschaften der Füllstoffe in den Polymeren zu verbessern.

Zu diesem Zweck kann man z. B. die betreffende Organosiliciumverbindung in einem organischen Lösungsmittel auflösen und mit dieser Lösung anschließend z. B. Clays behandeln (US-PS-3 227 675) Huber.

Aus der US-PS-3 567 680 ist bekannt, in Wasser suspendiertes Kaolin mit Mercapto- und Aminosilanen zu modifizieren. Die betreffenden Organosiliciumverbindungen sind jedoch in den für die Modifizierung nötigen Mengen wasserlöslich, so daß auch in diesem Fall die Behandlung des Füllstoffs aus einer Lösung heraus erfolgt.

Gemäß US-A-4 076 550 werden Abmischungen von Organosilanen und Kieselsäure als Füllstoff in vulkanisierbaren Kautschuken eingesetzt.

Dabei kann die Organosiliciumverbindung auch als Überzug auf der Oberfläche des Füllstoffs vorliegen.

In der älteren Anmeldung EP-A-0 126 186 sind Mischungen von Organosiliciumverbindungen und silikatischen Füllstoffen beschrieben, die in einer Variante des Herstellungsverfahrens auch durch Reaktion der beiden Komponenten miteinander bei erhöhter Temperatur entstehen.

Die Aufgabe der Erfindung besteht darin, Verfahren zur Herstellung von mit wasserunlöslichen Organosiliciumverbindungen modifizierten, mit Kautschuken verträglichen oxidischen oder silikatischen, feinteiligen Füllstoffen zu finden, bei denen man trotz der Wasserunlöslichkeit lösungsmittelfrei in wässriger Phase arbeiten kann.

Gegenstand der Erfindung ist ein Verfahren zur Herstellung von mit Kautschuken verträglichen, oxidischen oder silikatischen, natürlichen Füllstoffen, an der Oberfläche modifiziert mit mindestens einer Organosiliciumverbindung, wasserunlöslich ist und der Formel (I)

$$[R_n^1(RO)_{3-n}Si-(Alk)_m-(Ar)_p]_2[S]_x \qquad (I)$$

entspricht, in der bedeuten :

R und $R^1$ eine Alkylgruppe mit 1 bis 4 Kohlenstoffatomen, den Phenylrest, wobei alle Reste R und $R^1$ jeweils die gleiche oder eine verschiedene Bedeutung haben können, R eine $C_1$-$C_4$-Alkyl-$C_1$-$C_4$-Alkoxigruppe,

n : 0,1 oder 2

Alk : einen zweiwertigen, geraden oder verzweigten Kohlenwasserstoffrest mit 1 bis 6 Kohlenstoffatomen,

m : 0 oder 1

Ar : einen Arylenrest mit 6 bis 12 A-Atomen

p : 0 oder 1 mit der Maßgabe, daß p und m nicht gleichzeitig 0 bedeuten und

x : eine Zahl von 2 bis 8, das dadurch gekennzeichnet ist, daß man

a) bis zu 80 Gew. % mindestens einer wasserunlöslichen Organosiliciumverbindung mit der Formel I

$$[R_n^1(RO)_{3-n}Si-(Alk)_m-(Ar)_p]_2(S)_x$$

in Wasser emulgiert, gegebenenfalls in Anwesenheit einer oberflächenaktiven Substanz,

b) diese Emulsion mit der wässrigen Suspension eines oxidischen oder silikatischen, feinteiligen Füllstoffes oder einer Mischung verschiedener Füllstoffe bei einer Temperatur von 10 bis 50 °C, bevorzugt bei Raumtemperatur, unter Rühren vermischt,

c) das Gemisch gegebenenfalls auf eine Temperatur von 50 bis 100 °C, bevorzugt von 60 bis 80 °C aufheizt,

d) und nach Ablauf von 10 bis 120 min, bevorzugt von 30 bis 60 min, den modifizierten Füllstoff abfiltriert und bei Temperaturen von 100 bis 150 °C, bevorzugt von 105 bis 120 °C, trocknet oder die Suspension sprühtrocknet.

Die Organosiliciumverbindungen mit der Formel I können einzeln oder auch als Gemisch verschiedener Verbindungen in Wasser emulgiert werden. Beläuft sich die Gesamtmenge dieser Verbindungen nach der Vermischung mit der Suspension auf weniger als 3 Gew.-% (bezogen auf die wässrige Suspension), wird eine oberflächenaktive Substanz zur Unterstützung der Emulsionsbildung zugesetzt.

Dies ist bei Konzentrationen der Organosiliciumverbindung(en) ab 3 Gew. % nicht mehr notwendig,

obwohl es hilfreich sein kann.

Man stellt die Emulsion bevorzugt bei Raumtemperatur her. Es sind aber auch Temperaturen geeignet, die bis zum Siedepunkt der wässrigen Emulsion reichen.

Die Konzentration der Organosiliciumverbindung(en) in der hergestellten Emulsion beläuft sich auf 10 bis 80 Gew. %, bevorzugt 20 bis 50 Gew. %, bezogen auf die Gesamtmenge der Emulsion.

Der pH-Wert der Emulsion liegt ebenso wie der pH-Wert der Füllstoffsuspension nach dem Zumischen der Emulsion im schwach sauren oder schwach alkalischen, bevorzugt aber bei einem pH-Wert von etwa 7.

Unter dem verwendeten Begriff wasserunlöslich ist zu verstehen :

Nach dem Vermischen der Emulsion (ohne oberflächenaktive Substanz) mit der Suspension des Füllstoffs bildet sich um die Füllstoffteilchen herum im gewünschten pH- und Konzentrationsbereich keine klare Lösung der Organosiliciumverbindung(en). Es bleiben vielmehr die getrennten Phasen Wasser und Organosiliciumverbindung bestehen. Die oligosulfidischen Organosilane gemäß der oben angegebenen allgemeinen Formel I sind an sich bekannt und können nach bekannten Verfahren hergestellt werden. Beispiele für vorzugsweise eingesetzte Organosilane sind die z. B. nach der BE-PS-787 691 herstellbaren, Bis-(trialkoxysilyl-alkyl)-oligosulfide wie Bis-(trimethoxy-, triäthoxy-, -trimethoxyäthoxy-, -tripropoxy-, -tributoxy-, -tri-i-propoxy- und -tri-i-butoxy-silyl-methyl)-oligosulfide und zwar insbesondere die Di-, Tri-, Tetra-, Penta-, Hexasulfide usw., weiterhin Bis-(2-tri-methoxy-, -triäthoxy-, -trimethoxyäthoxy-, -tripropoxy- und -tri-n- und -i-butoxy- äthyl)-oligosulfide und zwar insbesondere die Di-, Tri-, Tetra-, Penta-, Hexasulfide usw., ferner die Bis-(3-trimethoxy-, -triäthoxy-, -trimethoxyäthoxy-, -tripropoxy-, -tri-n-butoxy- und tri-i-butoxy-silyl-propyl)-oligosulfide und zwar wiederum die Di-, Tri-, Tetrasulfide usw bis zu Octasulfiden, des weiteren die entsprechenden Bis-(3-trialkoxysilylisobutyl)-oligosulfide, die entsprechenden Bis-(4-trialkoxysilylbutyl)-oligosulfide. Von diesen ausgewählten, relativ einfach aufgebauten Organosilanen der allgemeinen Formel I werden wiederum bevorzugt die Bis-(3-trimethoxy-, -triäthoxy- und tripropoxysilylpropyl)-oligosulfide, und zwar die Di-, Tri-, Tetra- und Pentasulfide, insbesondere die Triäthoxyverbindungen mit 2, 3 oder 4 Schwefelatomen und deren Mischungen. Alk bedeutet in der allgemeinen Formel I einen zweiwertigen, geraden oder verzweigten Kohlenwasserstoffrest, vorzugsweise einen gesättigten Alkylenrest mit gerader Kohlenstoffkette mit 1 bis 4 Kohlenstoffatomen.

Speziell geeignet sind auch die Silane mit der folgenden Strukturformel

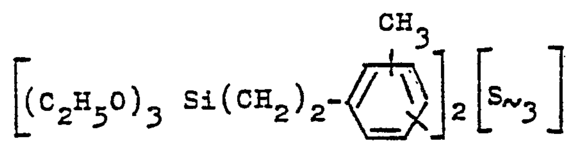 ,

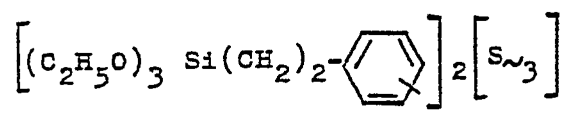

und deren Methoxianaloge, herstellbar nach der DE-AS-25 58 191.

Als oberflächenaktive Substanzen finden bevorzugt nichtionogene, kationische und anionische Tenside Verwendung. Ihre Konzentration in der Emulsion beträgt 1 bis 7 Gew. %, bevorzugt 3 bis 5 Gew. %.

Beispiele für derartige Tenside sind Alkylphenolpolyglycolether, Alkylpolyglycolether, Polyglycole, Alkyltrimethylammoniumsalze, Dialkyldimethylammoniumsalze, Alkylbenzyltrimethylammoniumsalze, Alkylbenzolsulfonate, Alkylhydrogensulfate, Alkylsufate.

Die zu modifizierenden natürlichen Füllstoffe, auch als Gemisch von zwei oder mehr dieser Füllstoffe, sind an sich in der Kautschuktechnologie bekannte Füllstoffe. Wesentliche Voraussetzung für ihre Eignung ist das Vorhandensein von OH-Gruppen an der Oberfläche der Füllstoffteilchen, die mit den Alkoxigruppen der Organosiliciumverbindungen reagieren können. Es handelt sich um oxidische und silikatische Füllstoffe, die mit Kautschukem verträglich sind, und die für diese Verwendung notwendige Feinteiligkeit aufweisen.

Als natürliche Silikate sind besonders Kaoline oder Clays geeignet. Aber auch Kieselgur oder Diatomeenerde können eingesetzt werden.

Als oxidische Füllstoffe sind beispielhaft zu nennen Aluminiumoxid, Aluminiumhydroxid oder -trihydrat und Titandioxid, die aus natürlichen Vorkommen gewonnen werden.

Die Emulsion wird in derartigen Mengen mit der Füllstoffsuspension vermischt, daß die Konzentration der Organosiliciumverbindung 0,3 bis 15 Gew.-%, bevorzugt 0,3 bis 2 Gew.-%, bezogen auf die Füllstoffmenge beträgt.

Die modifizierten Füllstoffe enthalten 0,3 bis 15 Gew. %, bevorzugt 0,3 bis 2 Gew. %, der Organosiliciumverbindungen, bezogen auf den trockenen Füllstoff.

Sie sind besonders geeignet zur Verwendung in vulkanisier- und formbaren Kautschukmischungen,

die nach den üblichen Verfahren in der Gummiindustrie hergestellt werden.

Eine nachteilige Wirkung der auf den Füllstoffoberflächen eventuell adsorbierten oberflächenaktiven Substanzen ist nicht festzustellen.

Zu den geeigneten Kautschukarten zählen alle noch Doppelbindungen enthaltende und mit Schwefel sowie Vulkanisationsbeschleuniger(n) zu Elastomeren vernetzbare Kautschuke und deren Gemische. Insbesondere sind dies die halogenfreie Kautschukarten, vorzugsweise sogenannte Dien-Elastomere. Zu diesen Kautschukarten zählen beispielsweise, gegebenenfalls ölgestreckte, natürliche und synthetische Kautschuke, wie Naturkautschuke, Butadienkautschuke, Isoprenkautschuke, Butadien-Styrol-Kautschuke, Butadien-Acrylnitril-Kautschuke, Butylkautschuke, Terpolymere aus Äthylen, Propylen und zum Beispiel nichtkonjugierten Dienen. Ferner kommen für Kautschukgemische mit den genannten Kautschuken die folgenden zusätzlichen Kautschuke infrage :

Carboxylkautschuke, Epoxidkautschuke, Trans-Polypentenamer, halogenierte Butylkautschuke, Kautschuke aus 2-Chlor-Butadien, Äthylen-Vinylacetat-Copolymere, Äthylen-Propylen-Copolymere, gegebenenfalls auch chemische Derivate des Naturkautschuks sowie modifizierte Naturkautschuke. Vorzugsweise werden Naturkautschuke und Polyisopren-Kautschuke eingesetzt und zwar allein oder in Mischungen miteinander und/oder jeweils in Mischung mit den obengenannten Kautschuken.

Der modifizierte Füllstoff wird in der Menge zugemischt, daß der Gewichtsanteil der auf ihm enthaltenen Organosiliciumverbindung zwischen 0,3 und 10 Gew. %, bevorzugt zwischen 0,3 und 2 Gew. %, bezogen auf den Kautschukanteil, liegt.

Dabei ist natürlich der vorgeschriebene Gesamtanteil des Füllstoffs in der vulkanisierbaren Kautschukmischung zu beachten.

Das bedeutet, daß sowohl die Gesamtmenge des einzusetzenden Füllstoffs als auch eine Teilmenge modifiziert sein kann. Im letzteren Fall ist der noch fehlende Teil dann in nicht modifizierter Form zuzumischen.

Die erfindungsgemäß hergestellten modifizierten Füllstoffe führen in den vulkanisierten Kautschukmischungen zu einer deutlichen Verbesserung der gummitechnischen Eigenschaften im Vergleich zu Mischungen, in die die Organosiliciumverbindung und der Füllstoff getrennt eingearbeitet wurden.

Es zeigt sich auch die Überlegenheit von Kautschukvulkanisaten, die den erfindungsgemäß hergestellten Füllstoff enthalten gegenüber Vulkanisaten mit einem Füllstoff, der mit einer wasserlöslichen Organosiliciumverbindung modifiziert wurde.

Die modifizierten Füllstoffe werden in folgenden Kautschukmischungen getestet :

Test Rezeptur 1 — Naturkautschuk

| | |
|---|---|
| SMR 5, ML 4 = 68 | 100 |
| Füllstoff | 100 |
| ZnO, RS | 5 |
| Stearinsäure | 2 |
| Agerite Stalite® | 1 |
| Circo Light® R.P.A. | 4 |
| MBTS | 1,25 |
| Schwefel | 2,75 |

Test Rezeptur 2 — SBR 1 500

| | |
|---|---|
| Ameripol® 1 502 | 100 |
| Füllstoff | 150 |
| ZnO, RS | 3 |
| Stearinsäure | 1 |
| D.E.G. | 3 |
| TMTD | 0,1 |
| MBTS | 1,5 |
| Schwefel | 2 |

Bei den verwendeten Emulgatoren, Organosiliciumverbindung und Füllstoffen handelt es sich um folgende Produkte :

Emulgatoren

Marlophen® 812 (CWH) = Nonylphenolpolyglycolether (12 Ethylenoxideinheiten)
Marlophen® 820 (CWH) = Nonylphenolpolyglycolether (20 Ethylenoxideinheiten)
Marlowet® GFW (CWH) = Alkylphenolpolyglycolether
Barquat® MB 80 = Alkyldimethylbenzylammoniumchlorid (Lonza)

Organosiliciumverbindung

Si 69 = Bis- 3-(triethoxisilyl)propyl- tetrasulfan (Degussa)
A 189 = Mercaptopropyltrimethoxisilan (Union Carbide)

Clays

Suprex® Clay, Hexafil® (ECC), HEWP (ECC) Speswhite® (ECC) (Huber)

Zur Beurteilung der gummitechnischen Eigenschaften der Vulkanisate werden folgende Werte ermittelt :

Spannungswert = Modul gemäß DIN 53504
Firestone Ball Rebound gemäß AD 20245
Abriebwiderstand gemäß DIN 53516
Compression Set B gemäß ASTM D 395
Goodrich Flexometer gemäß ASTM D 623 A

Beispiel 1

Zu einer wässrigen Tensidlösung mit einer Konzentration von 40 g/l wird unter starkem Rühren Si 69 zugegeben, so daß die Konzentration an Si 69 in der gebildeten Emulsion 90 g/l beträgt. Sofort nach der Zubereitung werden 200 ml dieser Emulsion in eine Suspension von 6 kg Suprex® Clay in 25 kg Wasser bei 40 °C unter Rühren gegeben. Die Suspension wurde auf 85 °C aufgeheizt, anschließend filtriert und getrocknet. In einem Versuch wurde auf das Aufheizen verzichtet. Das getrocknete Material wurde zuerst auf einer Zahnscheibenmühle und anschließend auf einer Stiftmühle vermahlen.

Eine Übersicht über die verwendeten Emulgatoren und die mit diesen in Naturkautschuk und Synthesekautschuk erzielten Resultate, ausgedrückt durch den Modul 300 zeigt Tabelle 1. Es kann festgestellt werden, daß mit allen verwendeten Emulgatoren eine deutliche Leistungssteigerung gegenüber der Referenzmischung mit einem unbehandelten Suprex® Clay erzielt wurde.

Daß neben der besseren Handhabbarkeit der modifizierten Füllstoffe gegenüber einer Zugabe von Silan während des Einmischens in die Kautschukmatrix zusätzlich eine Leistungssteigerung erzielt werden kann, zeigt Beispiel 2.

Beispiel 2

Die Vorgehensweise erfolgte analog Beispiel 1. Als Emulgator wurde Marlophen® 812 eingesetzt. Es wurden jeweils 0,3 bzw. 0,45 Gewichtsteile Silan auf 100 Gewichtsteile Suprex® Clay aufgebracht. Zum Vergleich wurde neben dem wasserunlöslichen Si 69 das in diesen Mengen wasserlösliche A 189 verwendet. Die hiermit erhaltenen Produkte wurden wiederum in Natur- und Synthesekautschuk eingearbeitet. Zum Vergleich wurde Si 69 in den entsprechenden Konzentrationen direkt in die Kautschukmischungen eingearbeitet. Tabelle 2 zeigt die erhaltenen Resultate. Es kann festgestellt werden, daß für das wasserunlösliche Si 69 eine Modifizierung des Füllstoffs der getrennten Zugabe in die Kautschukmischung überlegen ist.

In Beispiel 3 wird die Wirkungsweise bei weiteren Füllstoffen gezeigt.

Beispiel 3

Es wurden drei verschiedene Füllstoffe mit 0,5 Gewichtsteilen Si 69, bezogen auf 100 Gewichtsteile Füllstoff in wässriger Suspension modifiziert. Zu einer Suspension von 16 kg Hexafil® in 20 kg Wasser wurde unter Rühren eine Emulsion von 80 g Si 69 in 200 ml einer Lösung von Marlowet® GFW mit einer Konzentration von 40 g/l bei Raumtemperatur zugegeben. Nach einer halben Stunde wurde die Suspension auf Bleche gefüllt und im Trockenschrank getrocknet. Die Aufarbeitung erfolgte wie in Beispiel 1. Das gleiche Verfahren wurde mit HEWP durchgeführt, wobei ein Teil der Einsatzmengen wie folgt geändert wurde : 15 kg HEWP, 86 kg Wasser, 75 g Si 69. Als drittes wurden 30 kg fertig bezogener Speswhite® slurry (= 1,67 g/$cm^3$, Feststoffgehalt 1,1 g/ml) mit 100 g Si 69 in 200 ml Marlowet® GFW-Lösung (Konzentration 40 g/l) zur Reaktion gebracht. Die Prüfergebnisse in Natur- und Synthesekautschuk zeigt Tabelle 3. Auch hier ist ein deutlicher Anstieg der Moduli zu verzeichnen.

Neben der Verbesserung der Moduli werden auch andere wichtige gummitechnische Daten durch das erfindungsgemäße Vorgehen verbessert. Dies wird durch Beispiel 4 verdeutlicht.

Beispiel 4

Speswhite® slurry wie in Beispiel 3 beschrieben wurde mit verschiedenen Mengen Si 69 modifiziert. Bezogen auf 100 Gewichtsteile Füllstoff wurden 0,5, 1, 1,8, 2,6 und 3,5 Gewichtsteile Si 69 eingesetzt.

Hierzu wurden in die 200 ml Marlowet® CFW-Lösung die entsprechenden Mengen an Si 69 zugegeben. Bei der höchsten Konzentration von 3,5 Gewichtsteilen wurde auf das Tensid verzichtet, da diese relativ große Menge keines zusätzlichen Lösungsvermittlers bedarf. Als Vergleichssubstanz wurde ein Speswhite® slurry ohne weitere Zugaben gleich aufgearbeitet. Die Aufarbeitung erfolgte wie in den vorhergehenden Beispielen beschrieben. Die ermittelten gummitechnischen Daten in Natur- und Synthesekautschuk sind in den Tabellen 4 und 5 aufgelistet. Durch Zugabe größerer Mengen an Si 69 über 0,5 Gewichtsteile hinaus können weitere Verbesserungen der Eigenschaften erzielt werden.

Tabelle 1 : Wirkungsweise verschiedener Tenside bei der Modifizierung von Suprex® Clay mit Si 69

| | Modul 300 | |
|---|---|---|
| Verwendetes Tensid | Naturkautschuk | Synthesekautschuk |
| Marlophen ® 812 | 9,6 | 7,4 |
| Marlophen ® 812[1)] | 9,3 | 7,6 |
| Marlophen ® 820 | 9,9 | 8,7 |
| Marlowet ® GFW | 9,6 | 9,2 |
| Barquat ® MB 80 | 10,1 | 9,6 |
| Natriumdodecylsulfat | 9,4 | 7,7 |
| Alkylbenzolsulfonat | 9,8 | 7,6 |
| Referenzmischung (unbehandelter Clay) | 8,5 | 5,0 |

1) Suspension wurde bei Raumtemperatur gerührt.

Tabelle 2 : Vergleich der getrennten Zugabe von Silan zur Kautschukmischung mit dem modifizierten Suprex® Clay

| | | Modul 300 | |
|---|---|---|---|
| | Gew. Teile Silan | Naturkautschuk | Synthesekautschuk |
| Suprex ® Clay | 0 | 7,5 | 4,6 |
| Suprex ® Clay | 0,3 Si 69 getrennte | 8,1 | 7,1 |
| Suprex ® Clay | 0,45 Si 69 | 8,6 | 6,2 |
| Suprex ® Clay modifiziert mit | 0,3 Si 69 | 8,9 | 8,6 |
| Suprex ® Clay modifiziert mit | 0,45 Si 69 | 9,6 | 10,0 |
| Suprex ® Clay modifiziert mit | 0,3 A 189 | 8,3 | 6,9 |
| Suprex ® Clay modifiziert mit | 0,45 A 189 | 8,3 | 7,1 |

Tabelle 3 : Erhöhung der Moduli verschiedener Füllstoffe im Verglech zum unmodifizierten Füllstoff

| | Naturkautschuk | | Synthesekautschuk | |
|---|---|---|---|---|
| | Modul 100 | Modul 300 | Modul 100 | Modul 300 |
| Hexafil ® modifiziert[1)] | 3,8 | 11,2 | 5,4 | 8,3 |
| Hexafil ® unmodifiziert | 3,3 | 8,6 | 4,1 | 8,2 |
| HEWP modifiziert[1)] | 3,6 | 11,7 | 5,9 | 12,8 |
| HEWP unmodifiziert | 3,5 | 8,9 | 3,5 | 6,3 |
| Speswhite ® modifiziert[1)] | 9,5 | nicht mehr meßbar | 9,9 | nicht mehr meßbar |
| Speswhite ® unmodifiziert | 6,7 | 12,7 | 6,4 | 8,0 |

1) gemäß Beispiel 3

Tabelle 4 : Modifizierter Speswhite® in Naturkautschuk

| Gewichtsteile Si 69 | Modul 100 | Abrieb-widerstand | Compression set | Firestone ball rebound | Goodrich Flexometer |
|---|---|---|---|---|---|
| 0 | 6,7 | 332 | 55,8 | 53,5 | 149 |
| 0,5 | 9,5 | 267 | 35,9 | 53,5 | 111 |
| 1 | 10,7 | 295 | 33,0 | 53,8 | 103 |
| 1,8 | 10,7 | 290 | 31,6 | 54,0 | 100 |
| 2,6 | 11,0 | 265 | 30,0 | 55,6 | 96 |
| 3,5 | 11,3 | 254 | 28,3 | 55,9 | 95 |

Tabelle 5 : Modifizierter Speswhite® in Synthesekautschuk

| Gewichtsteile Si 69 | Modul 100 | Abrieb-widerstand | Compression set | Firestone ball rebound | Goodrich Flexometer |
|---|---|---|---|---|---|
| 0 | 6,4 | 271 | 46,6 | 36,5 | thermisch zerstört nach 10 Minuten |
| 0,5 | 9,9 | 256 | 25,6 | 37,9 | 194 |
| 1 | 10,8 | 256 | 22,0 | 37,8 | 141 |
| 1,8 | 11,5 | 280 | 21,5 | 40,5 | 127 |
| 2,6 | 12,1 | 238 | 19,6 | 41,3 | 117 |
| 3,5 | 11,9 | 261 | 19,3 | 39,8 | 123 |

Beispiel 5

Es wurde der Einfluß des Emulgators auf die Eigenschaften des Clays geprüft :

Tabelle 6

| | Modul 300 [MPa] | | | |
|---|---|---|---|---|
| | a) Clay (unbeh.) | b) Clay + Si 69 | c) Clay + GFW | d) Clay + Si 69 + GFW |
| Rezeptur 1 (Naturkautschuk) | 7,7 | 8,2 | 7,7 | 9,1 |
| Rezeptur 2 (SBR 1500) | 5,5 | 6,7 | 5,7 | 8,5 |

Es zeigt sich, daß der Emulgator keinen Einfluß auf die gummitechnischen Eigenschaften des Clays hat, wie hier beispielhaft am Modul 300 nachgewiesen wurde (Proben a, c).

Die Modifizierung von Clay mit Si 69 in Dispersionen, die weniger als 3 Gew.-% Si 69, bezogen auf die Menge der Dispersion, enthalten, aber keinen Emulgator, führt zwar zu einer gewissen Verbesserung des M 300-Werts (Probe b). Diese kann jedoch aufgrund der ungenügenden Verteilung des Si 69 in der Füllstoffdispersion nicht zu den guten Werten führen, die bei Verwendung von Si 69 in gleicher Konzentration in Kombination mit einem Emulgator erzielt werden (Probe d).

**Patentansprüche**

1. Verfahren zur Herstellung von natürlichen oxidischen oder silikatischen Füllstoffen an der Oberfläche modifiziert mit mindestens einer Organosiliciumverbindung, die wasserunlöslich ist und der Formel (I)

$$[R_n^1(RO)_{3-n}Si-(Alk)_m-(Ar)_p]_2[S]_x \qquad (I)$$

entspricht, in der bedeuten :

R und $R^1$ eine Alkylgruppe mit 1 bis 4 Kohlenstoffatomen, den Phenylrest, wobei alle Reste R und $R^1$ jeweils die gleiche oder eine verschiedene Bedeutung haben können, R eine $C_1$-$C_4$-Alkyl-$C_1$-$C_4$-Alkoxigruppe,

n : 0,1 oder 2

Alk : einen zweiwertigen, geraden oder verzweigten Kohlenwasserstoffrest mit 1 bis 6 Kohlenstoffatomen,

m : 0 oder 1

Ar : einen Arylenrest mit 6 bis 12 C-Atomen

p : 0 oder 1 mit der Maßgabe, daß p und m nicht gleichzeitig 0 bedeuten und

x : eine Zahl von 2 bis 8 ;

dadurch gekennzeichnet, daß man

a) bis zu 80 Gew.-% mindestens einer Organosiliciumverbindung gemäß der Formel (I) in Wasser emulgiert, gegebenenfalls in Anwesenheit einer oberflächenaktiven Substanz

b) diese Emulsion mit der wässrigen Suspension eines oxidischen oder silikatischen, natürlichen

Füllstoffs bei einer Temperatur von 10 bis 50 °C unter Rühren vermischt, daß in der Suspension 0,3 bis 15 Gew.-% der Organosiliciumverbindung(en)gemäß Formel (I), bezogen auf den Füllstoff, enthalten sind,

c) das Gemisch gegebenenfalls auf eine Temperatur von 50 bis 100 °C aufheizt und

d) nach Ablauf von 10 bis 120 min den Füllstoff abfiltriert und bei 100 bis 150 °C trocknet oder die Suspension sprühtrocknet.

2. Verwendung der gemäß Anspruch 1 erhaltenen Füllstoffe in form- und vulkanisierbaren Kautschukmischungen.

**Claims**

1. A process for the preparation of natural oxidic or silicic fillers which are surface-modified with at least one organosilicon compound which is water-insoluble and corresponds to formula (I)

$$[R_n^1(RO)_{3-n}Si-(Alk)_m-(Ar)_p]_2[S]_x \qquad (I)$$

wherein

R and $R^1$ represent an alkyl group containing from 1 to 4 carbon atoms, the phenyl radical, wherein all radicals R and $R^1$ can each have the same or a different meaning, R represents a $C_1$-$C_4$-alkyl-$C_1$-$C_4$-alkoxy group,

n represents 0,1 or 2

Alk represents a divalent, straight or branched hydrocarbon radical containing from 1 to 6 carbon atoms,

m represents 0 or 1

Ar represents an arylene radical containing from 6 to 12 C-atoms.

p represents 0 or 1 providing that p and m do not represent 0 simultaneously and

x represents a number from 2 to 8,

characterised in that

a) up to 80 % by weight of at least one organosilicon compound according to formula (I) is emulsified in water, optionally in the presence of a surface-active substance

b) this emulsion is mixed with the aqueous suspension of an oxidic or silicic, natural filler at a temperature of from 10 to 50 °C with stirring, so that from 0.3 to 15 % by weight of the organosilicon compound(s) according to formula (I), based on the filler are contained in the suspension,

c) the mixture is optionally heated to a temperature of from 50 to 100 °C and

d) After 10 to 120 minutes, the filler is filtered and is dried at from 100 to 150 °C, or the suspension is spray dried.

2. Use of the fillers obtained according to claim 1 in shapeable and vulcanisable rubber mixtures.

**Revendications**

1. Procédé de préparation de charges naturelles du type oxyde ou silicate, modifiées en surface par au moins un composé organosilicique qui est insoluble dans l'eau et répond à la formule (I)

$$[R_n^1(RO)_{3-n}Si-(Alk)_m-(Ar)_p]_2[S]_x \qquad (I)$$

dans laquelle les symboles ont les significations suivantes :

R et $R^1$ : Groupe alkyle à 1-4 atomes de carbone, groupe phényle, tous les radicaux R et $R^1$ pouvant avoir les mêmes significations ou des significations différentes, R pouvant être un groupe $C_1$-$C_4$-alkyl-$C_1$-$C_4$-alcoxy,

n : 0, 1 ou 2,

Alk : Radical hydrocarbone bivalent à 1-6 atomes de carbone à chaîne droite ou ramifiée,

m : 0 ou 1,

Ar : Radical arylène à 6-12 atomes de C,

p : 0 ou 1, avec cette condition que p et m ne soient pas mis en même temps pour 0, et

x : Nombre de 2 à 8,

caractérisé en ce que

a) on émulsionne dans l'eau jusqu'à 80 % en poids d'au moins un composé organosilicique de formule (I), le cas échéant en présence d'une substance surfactive,

b) on mélange cette émulsion, sous agitation et à une température de 10 à 50 °C, avec la

suspension aqueuse d'une charge naturelle du type oxyde ou silicate, de telle manière qu'il soit contenu, dans la suspension, 0,3 à 15 % en poids du ou des composés organosiliciques de formule (I), sur la base de la matière de charge,

c) on chauffe éventuellement le mélange à une température de 50 à 100 °C et

d) au bout de 10 à 120 mn, on filtre la matière de charge et on la sèche à une température de 100 à 150 °C ou on sèche la suspension par pulvérisation.

2. Utilisation de la matière de charge obtenue suivant la revendication 1 dans des mélanges de caoutchoucs moulables et vulcanisables.